(19) Europäisches Patentamt
European Patent Office
Office européen des brevets

(11) **EP 4 676 045 A1**

(12) **EUROPEAN PATENT APPLICATION**

(43) Date of publication:
**07.01.2026 Bulletin 2026/02**

(21) Application number: **24306272.6**

(22) Date of filing: **26.07.2024**

(51) International Patent Classification (IPC):
*H04N 19/12* (2014.01)     *H04N 19/157* (2014.01)
*H04N 19/176* (2014.01)     *H04N 19/463* (2014.01)
*H04N 19/593* (2014.01)

(52) Cooperative Patent Classification (CPC):
**H04N 19/12; H04N 19/157; H04N 19/176;
H04N 19/463; H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.07.2024 EP 24306062**

(71) Applicant: **Beijing Xiaomi Mobile Software Co.,
Ltd.
Beijing 100085 (CN)**

(72) Inventors:
• **ABDOLI, Mohsen
  Beijing 100085 (CN)**
• **GHAZNAVI YOUVALARI, Ramin
  Beijing 100085 (CN)**
• **TISSIER, Alexandre
  Beijing 100085 (CN)**

(74) Representative: **RVDB Rennes
44 rue Lariboisière
35235 Thorigné-Fouillard (FR)**

(54) **ENCODING/DECODING VIDEO PICTURE DATA**

(57)     The present disclosure relates to implicit transform type derivation that improves the current inheritance transform type method as defined in ECM and helps TIMD merge mode (or similar applicable modes) to implicitly replace transform types as inherited by the current inheritance transform type method by other transform type if certain conditions are fulfilled.

Fig. 15

## Description

FIELD

The present application generally relates to video picture encoding and decoding. Particularly, but not exclusively, the technical field of the present application is related to prediction of video picture block.

BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

At least one exemplary embodiment of the present application has been devised with the foregoing in mind.

ECM (Algorithm description of Enhanced Compression Model 10 (ECM 10), JVET-AE2025, Geneva, 11-19 July 2023) defines a Decoder-side Intra Mode Derivation (DIMD) mode and Template-based Intra Mode Derivation (TIMD) modes for determining predicted samples of a current block for both luma and chroma samples.

ECM further defines a TIMD merge mode as being an intra coding tool based on TIMD with an exception that TIMD merge keeps a merge list of TIMD merge mode candidates that are collected as already coded blocks from causal neighbourhood. TIMD merge mode benefits from a transform inheritance method to implicitly derive its transform type from its selected neighbouring candidate. Although this method is beneficial both in terms of encoding time and bitrate saving, it has drawbacks when the selected candidate has different residual characteristics, hence, its choice of transform type is not necessarily correlated with that of current block. Therefore, the inheritance of transform type would result in suboptimal results.

One of the problem is to improve the current inheritance of transform types.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of coding a block of picture comprising:

- applying a transform on residual block of the block of picture obtained based on the block of picture and a prediction block,
- the prediction block being derived based on merge-based prediction mode relying on neighboring blocks to derive prediction parameters used for coding the block of picture and inherited transform type associated with the prediction parameters,

wherein a decision is made to indicate whether the applied transform on residual block either uses the inherited transform type or a derived transform type that is different from the inherited transform type.

According to a second aspect of the present application, there is provided a method of decoding a block of picture comprising:

- applying an inverse transform on residual block of the block of picture obtained based on the block of picture and a prediction block,
- the prediction block being derived based on merge-based prediction mode relying on neighboring blocks to derive prediction parameters used for decoding the block of picture and inherited transform type associated with the prediction parameters, wherein a decision is made to indicate whether the applied inverse transform on residual block either uses the inherited transform type or a derived transform type that is different from the inherited transform type.

In some embodiments, the decision is based on whether a condition on the either the width, the height and/or both the with and the height of the block of picture or the size of a transform unit is fulfilled.

In some embodiments, the condition is based on a comparison of the either the width, the height and/or both the with and the height of the block of picture or the either the width, the height and/or both the with and the height of the transform unit with at least one threshold.

In some embodiments, at least two thresholds defines a block of picture or transform unit size interval In some embodiments, the transform unit size interval is between 4 and 16 residual pixels.

In some embodiments, the decision is based on a condition on transform types chosen for the neighboring blocks of the block of picture

In some embodiments, the condition is based on a comparison of a metric of diversity of transform types chosen for the neighboring blocks of the block of picture with a threshold

In some embodiments, the neighboring blocks are located at left, top and top-left or other adjacent positions of the block of picture.

In some embodiments, the decision is based on the nature of the transform type associated with the prediction block.

In some embodiments, the transform applied on residual of the block of picture being a separable transform, and wherein the decision is made for each transform direction.

In some embodiments, the decision is made for each direction independently to each other.

In some embodiments, the derived transform type is fixed to a certain transform type.

In some embodiments, the certain transform type is DST-7.

In some embodiments, the derived transform type is based on characteristics of the block of picture.

In some embodiments, the merge-based prediction mode is a TIMD-merge mode.

In some embodiments, the transform type associated with prediction parameters is default transform type.

In some embodiments, the transform type associated with prediction parameters is inherited from transform type associated with at least one of the neighboring blocks.

According to a third aspect of the present application, there is provided an apparatus comprising means for performing one of the methods according to the first aspect of the present application.

According to a fourth aspect of the present application, there is provided a computer program product including instructions which, when the program is executed by one or more processors, causes the one or more processors to carry out a method according to the first aspect of the present application.

According to a fifth aspect of the present application, there is provided a non-transitory storage medium carrying instructions of program code for executing a method according to the first of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC;

**Figure 2** shows an example of partitioning coding units into prediction units in accordance with HEVC;

**Figure 3** shows an example of a CTU division in accordance with WC;

**Figure 4** shows examples of split modes supported in the multi-type tree partitioning in accordance with WC;

**Figure 5** shows a schematic block diagram of a method 100 of encoding a video picture VP in accordance with prior art;

**Figure 6** shows a schematic block diagram of a method 200 of decoding a video picture VP in accordance with prior art;

**Figure 7** shows an example of template for computing a Histogram of Gradients in accordance with prior art;

**Figure 8** shows an example of calculating an intra-predictor of a current video picture block based on a weighted linear combination of three intrapredictors in accordance with prior art;

**Figure 9** shows an example of co-located luma block corresponding to a chroma block. a selection of PSAO parameters in accordance with prior art;

**Figure 10** shows an example of definition of non-adjacent spatial neighboring blocks in accordance with prior art;

**Figure 11** shows an example of the first template of a block used for template prediction, and an example of the second template used for calculating a prediction cost;

**Figure 12** illustrates an example of a TIMD merge list and examples of information associated to TIMD merge mode candidate of the TIMD merge list in accordance with some embodiments.

**Figure 13** illustrates examples of adjacent and non-adjacent blocks that are checked for generating the TIMD merge list of TIMD merge mode candidates.

**Figure 14** illustrates an example of inheriting horizontal and vertical transform types from a neighbor CU by TIMD-merge.

**Figure 15** illustrates schematically a block diagram of a method for replacing inherited transform type by derived transform type when merge-based prediction mode is TIMD-merge mode, according to embodiments.

**Figure 16** illustrates how the CU/TU size can be used to determine whether inherited transform type should be replaced by the derived transform type, according to embodiments.

**Figure 17** illustrates an example of how to determine whether or not replace the inherited transform, based on the neighboring CUs/Tus, according to embodiments.

**Figure 18** illustrates how each transform direction can be replaced independently, according to embodiments.

**Figure 19** shows a block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspect relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprised in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture (or block of picture) is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

In the state-of-the-art video compression systems such as HEVC or VVC low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left bounds spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 (**CTU DW=CTU DH**=128). A default CTU size (height, width) is encoded into the bitstream, for example at a sequence level in the Sequence Parameter Set (SPS).

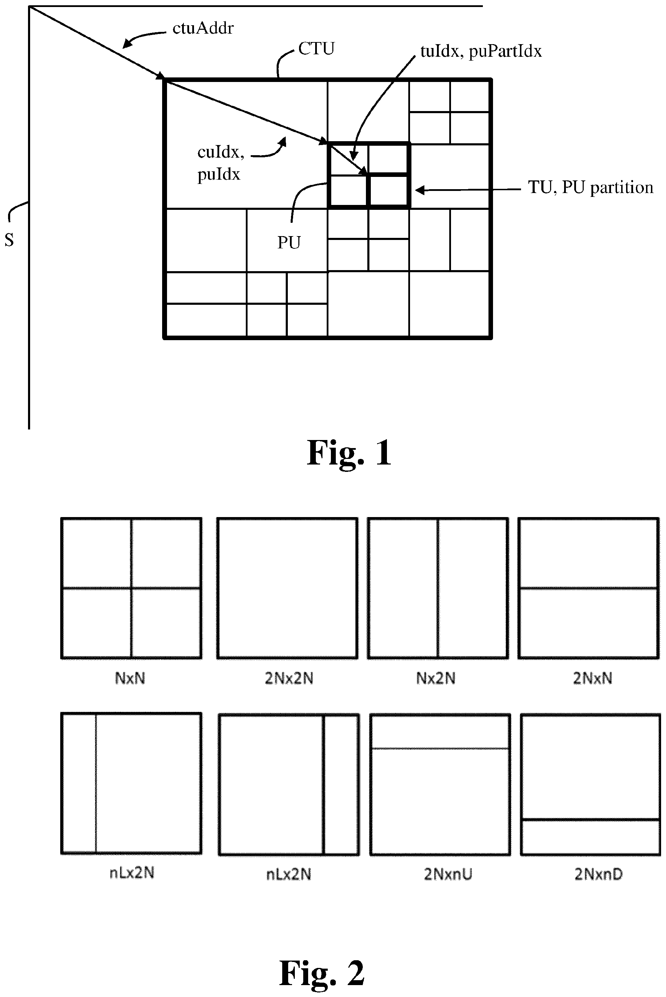

The spatial position of a CTU in a CTU grid is determined from a CTU address **ctuAddr** defining a spatial position of the top-left corner of a CTU from an origin. As illustrated on **Figure 1**, the CTU address may define the spatial position from the top-left corner of a higher-level spatial structure S containing the CTU.

A coding tree is associated with each CTU to determine a tree-division of the CTU.

As illustrated on **Figure 1**, in HEVC, the coding tree is a quad-tree division of a CTU, where each node is called a Coding Unit (CU). The spatial position of a CU in the video picture is defined by a CU index **culdx** indicating a spatial position from the top-left corner of the CTU. A CU is spatially partitioned into one or more Prediction Units (PU). The spatial position of a PU in the video picture VP is defined by a PU index **puIdx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuIdx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 2.** They include square partitions (2Nx2N and NxN), which are the only ones used in both Intra and Inter predicted CUs, symmetric non-square partitions (2NxN, Nx2N, used only in Inter predicted CUs), and asymmetric Partitions (used only in Inter predicted CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

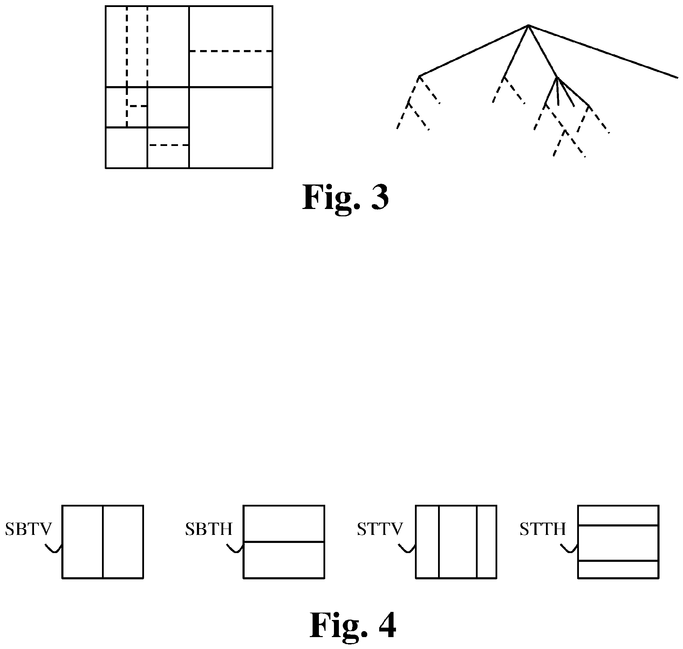

As illustrated on **Figure 3,** in VVC, the coding tree starts from a root node, i.e., the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

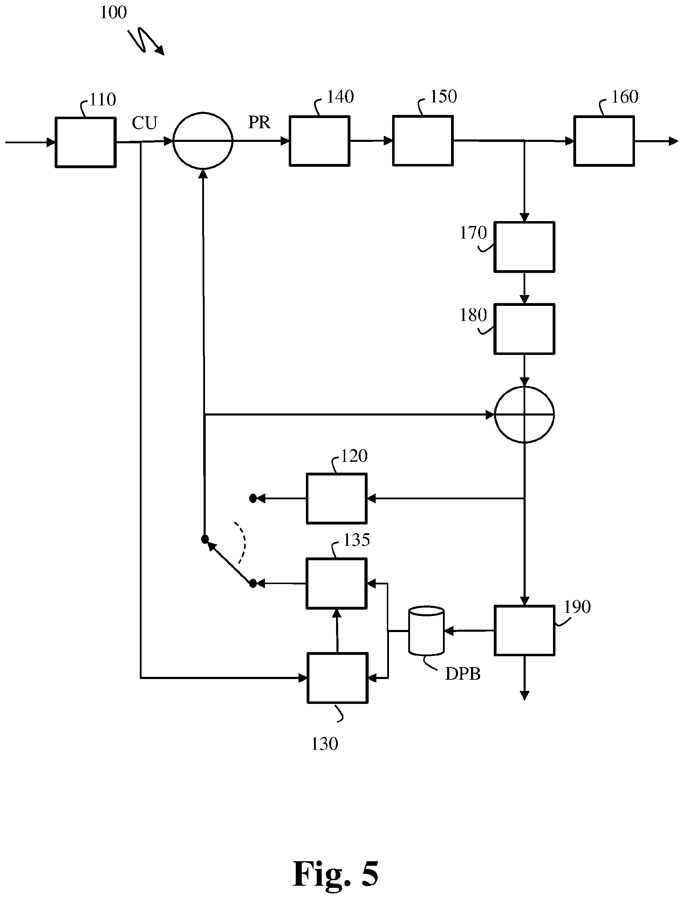

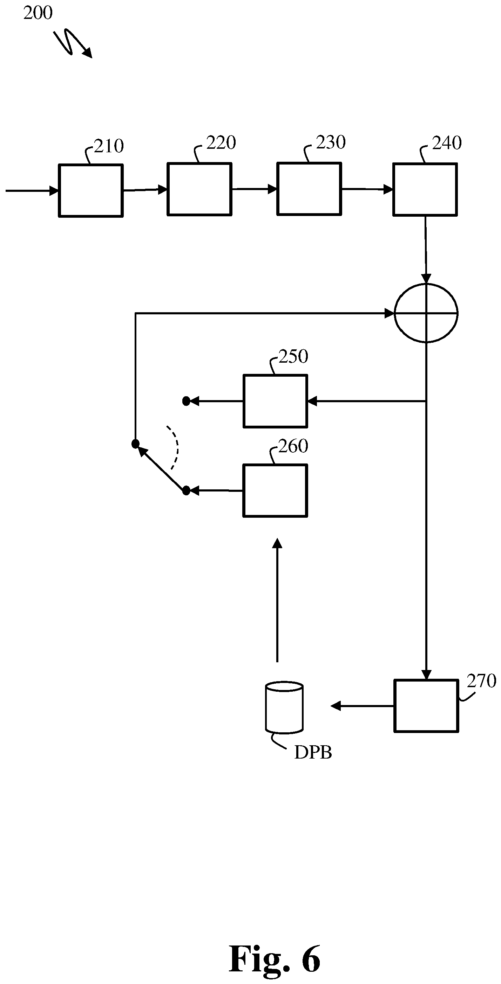

**Figures 5** and **6** provide an overview of video encoding/decoding methods used in current video standard compression systems like HEVC or VVC for example.

**Figure 5** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along an encoding loop also called "in loop" using either an intra or inter prediction mode.

Intra prediction (step 120) used intra prediction data. Intra prediction consists in predicting a current block by means of an intra-predicted block based on already encoded, decoded and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is inter-prediction data comprising motion information (typically one or more motion vectors and one or more reference video picture indices) associated to the current block and other information used for obtaining a same predicted block at the encoding/decoding side. Next, motion compensation (step 135) obtains a predicted block by means of the motion vector(s) and reference video picture index (indices) determined by the motion estimation step 130. Basically, the block belonging to a selected reference video picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference video picture to compute the predicted block.

Prediction information data is signaled into the bitstream. The prediction information may comprise prediction mode (intra or inter or skip), intra/inter prediction data and any other information used for obtaining a same predicted CU at the decoding side.

The method 100 selects one prediction mode (the intra or inter prediction mode) by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the intra and inter prediction modes are set in a list of Most Probable candidate Modes (MPM list) and the best prediction mode is given as being the prediction mode p* for a current block given by:

$$p^* = \underset{p \in P}{\text{Argmin}}\{RD_{cost}(p)\} \qquad (1)$$

where $P$ is the MPM list for the current block, p represents a candidate coding mode in that MPM list, $RD_{cost}(p)$ is a rate-distortion cost of candidate prediction mode $p$, typically expressed as:

$$RD_{cost(p)} = D(p) + \lambda \cdot R(p)$$

$D(p)$ is the distortion between the current block and a reconstructed block obtained after encoding/decoding the current block based on the candidate prediction mode $p$, $R(p)$ is a rate cost associated with the coding of the current block based on the prediction mode $p$, and $\lambda$ is the Lagrange parameter representing the rate constraint for coding the current block and typically computed from a quantization parameter Qp used for encoding the current block.

The current block is usually encoded from a prediction residual block PR. More precisely, a prediction residual block PR is calculated, for example, by subtracting the best predicted block from the current block. The prediction residual block PR is then red (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the predicted block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 6** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In step 220, a reconstructed picture is divided into current blocks based on the partitioning information. Each current block is entropy decoded from the bitstream along a decoding loop also called "in loop". Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks, or the filtered reconstructed blocks form a reference picture that may be stored into a decoded picture buffer (DPB) as above discussed (**Figure 5**).

In the context of signal processing and video coding, transforms can be classified into separable and non-separable types based on how they handle the 2D residual signal (prediction residual block).

A transform is called separable if it can be decomposed into a series of one-dimensional (1D) transforms applied independently along each dimension (horizontal and vertical). In other words, a separable transform can be applied by first transforming all the rows, followed by transforming all the columns (or vice versa).

Alternatively, a transform is non-separable if it cannot be decomposed into independent 1D transforms along each dimension. Instead, it requires a joint transformation across all dimensions.

From high level, when the transform is used for residual coding in ECM, the encoder has choices between DST-based and DCT-based transforms and possibly other transform types. In the DST-based category, ECM provides DST-1, DST-4 and DST-7, while in the DCT-based category, it provides DCT-2, DCT-5 and DCT-8. These transforms have different characteristics and they can be suitable for different types of textures existing in the residual.

For instance, it is known that DCT category is more suitable for CUs that typically exhibit energy compaction properties. This means CUs where most of the energy or information is concentrated in a few coefficients (usually low-frequency components) benefit from DCT. Examples include texture-rich regions in frames where most of the details are spread across various frequencies. On the other hand, DST category of transforms are more appropriate for CUs that involve edges, boundaries, or areas with abrupt changes in texture or intensity. DST is particularly effective in capturing discontinuities and sharp transitions due to its ability to represent odd functions well.

In VVC as well as ECM, Multiple Transform Selection (MTS) is used. MTS is a tool that allows different transform types to be applied within a CU. This means that instead of using a single transform type for the entire CU, different CUs can be encoded using different transform types based on their characteristics. Explicit MTS enables this by allowing the encoder to signal which transform type to use for each part of the CU. The MTS index is a parameter that determines which transform type is applied to different horizontal and vertical partitions within the CU. This index is signaled along with other coding parameters and is used by the decoder to reconstruct the original signal. When encoding a CU, the encoder tries different MTS indexes for the CU, and for each tested MTS index, it translates the index into a pair of horizontal and vertical transform types. Finally, the index that represents the best transform pair is signaled in the bitstream.

Currently in both VVC and ECM, an implicit variant of MTS may be used. This technique that is applied only under certain conditions, compares the width and height of current CU with an interval (e.g. between 4 and 16). For each side of the CU (i.e. width and height), if the size falls into the interval, then DST-7 is implicitly selected as the transform type. Otherwise, the implicit transform type is set to DCT-2.

ECM defines a DIMD mode for determining predicted samples of a current block for both luma and chroma samples. DIMD mode is not a linear-model based mode, in short non-LM mode, i.e. an intra prediction mode that does not refer to a linear model, and DIMD mode does not require explicit parameters signaling such as, for instance planar prediction mode, or Direct mode (DM).

For luma sample prediction, the use of DIMD luma mode is signalled in a bitstream by a single flag and the intra predictor is not explicitly signalled in the bitstream but derived based on a gradient analysis of neighbouring reconstructed luma samples i.e. DIMD luma mode is implicit. Thus, intra predictor is derived based on a DIMD luma mode during reconstruction process identically at the encoder and decoder sides.

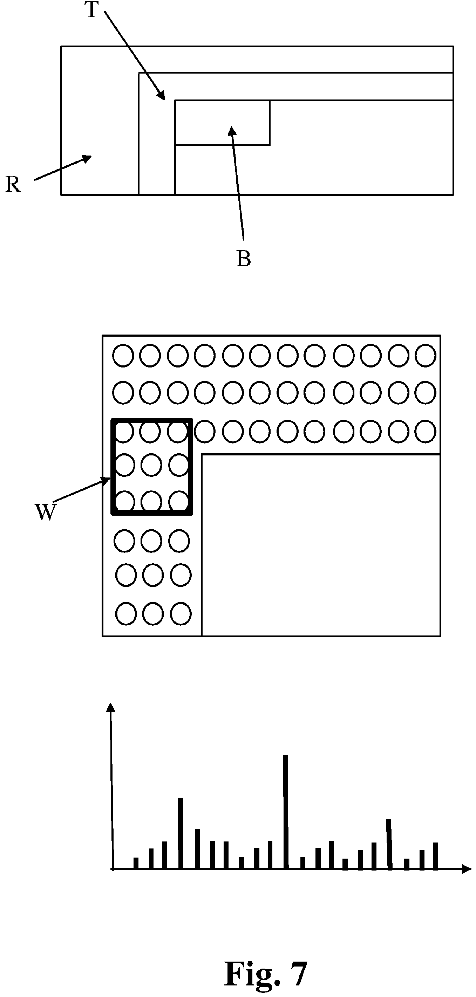

In DIMD luma mode, as illustrated on **Figure 7,** a 3-samples wide (in width or height) template area T (composed of left, above and above-left reconstructed luma samples of reconstructed area R) is defined in which edge detection filters (3x3 horizontal and vertical Sobel filters), adjacent to a current block B (current CU), are applied in order to determine the amplitude and angle of luminance directions (orientation) for each middle line sample of the (available) template area T. A Histogram of Gradients (HoG) is computed where each entry corresponds to conventional intra angular modes and cumulated intensities (amplitudes) are stored:

$$angle = \arctan\left(G_{hor}/G_{ver}\right)$$

$$amplitude = |G_{hor}| + |G_{hor}|$$

with $G_{hor}$ and $G_{ver}$ are the intensity of pure horizontal and vertical directions as calculated by Sobel filters. Conventional intra angular modes refer to the existing intra angular modes in for example HEVC and VVC specifications, where each angular mode specifically aims in capturing the direction of the texture in a certain direction or angle. Note the term non-angular modes refer to intra modes that do not capture the direction or angle of the texture. For example, DC (Direct coding) and Planar intra modes can be considered as non-angular modes.

In DIMD luma mode, a luma blending (mixing, fusing) is applied as a weighted average of three luma predictors of the current block: two HoG-based predictors and a planar predictor (M. Abdoli et al, "Non-CE3: Decoder-side Intra Mode Derivation with Prediction Fusion Using Planar", JVET-O0449, Gothenburg, July 2019).

A planar predictor is derived from a planar mode in which the predicted sample values are obtained as a weighted average of 4 reference sample values. Here, the reference samples in the same row or column as the current sample and the reference samples on the bottom-left and on the top-right position with respect to the current block are used. In VVC, a reference sample smoothing filter is also applied for the Planar mode in the luma component depending on the block size.

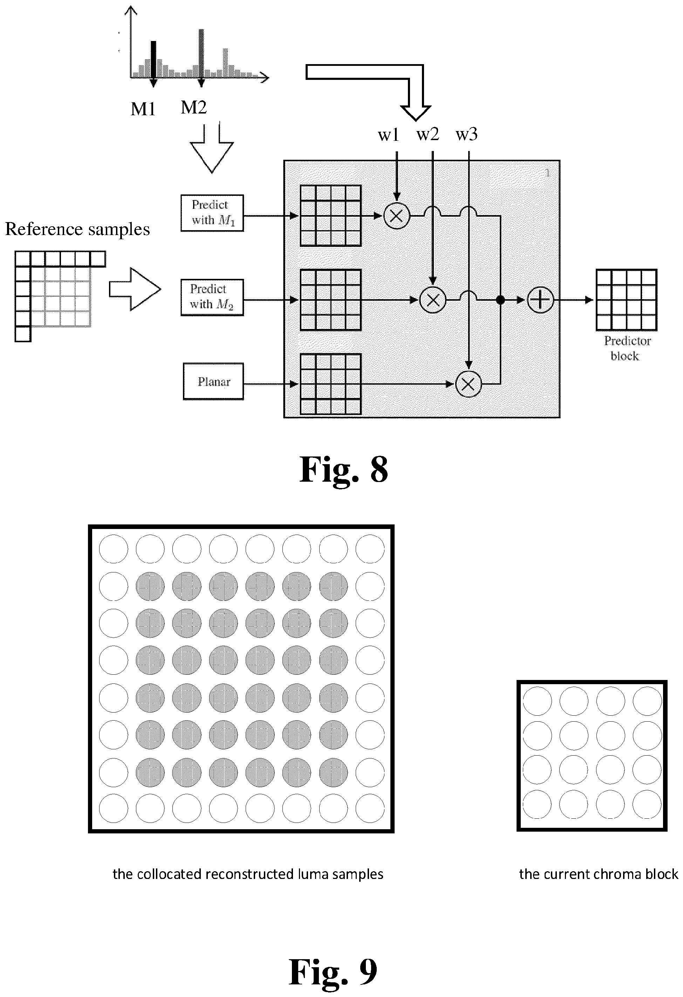

As illustrated on **Figure 8,** the prediction block of the current block are derived from a weighted linear combination of six predictors: Five HoG-based predictors derived by using the five most represented angular intra modes Mi (i=1 to 5) and one predictor derived by using a planar mode. **Figure 8** illustrates a variant wherein only the prediction block is derived as a weighted linear combination of three HoG-based predictors but the principle may be easily extended to six predictors: two HoG-based predictors M1 and M2 (having the largest histogram amplitude values) selected from the HoG and a third predictor derived by using a planar mode. The weighted linear combination of the three predictors uses weights $w_1, w_2, w_3$ derived, for example as follows: the weight of planar is fixed to 21/64 (~1/3). The remaining weight of 43/64 (~2/3) is then shared between the two other predictors, proportionally to the amplitude of their HoG bars. As another example, the three weights may be derived as follows for a block of size $W \times H$: a weight $wDimd_i$ is derived for each of the three predictors as discussed below in relation with DIMD merge mode. Next, the weight $w_i$ for each of the three derived modes is derived based on the weight $wDimd_i$ as follows: If the one the above or left HoG magnitudes is twice larger than the other one. In this case, the weights $w_i(x,y)$ are location dependent and computed as follows:

If the above HoG is twice the left, then:

$$w_i(x, y) = wDimd_i + \Delta_i - 2\Delta_i \frac{y}{(H-1)},$$

If the left HoG is twice the above, then:

$$w_i(x, y) = wDimd_i + \Delta_i - 2\Delta_i \frac{x}{(W-1)},$$

where $\Delta_i$ is pre-defined and may be set to 10.

For chroma sample prediction, the use of DIMD chroma mode is signalled in a bitstream by a single flag and the intra predictor is not explicitly signalled in the bitstream but derived by using a gradient analysis of neighbouring reconstructed luma and chroma samples i.e. DIMD chroma mode is implicit. Thus, intra predictor is derived from a DIMD chroma mode during reconstruction process identically at the encoder and decoder sides.

In DIMD chroma mode, an intra predictor of a chroma block may be derived based on co-located reconstructed luma samples of a luma block associated with the chroma block to be predicted. Specifically, a horizontal gradient and a vertical gradient are calculated for each co-located reconstructed luma sample (grey circles on **Figure 9,** extracted from JVET-Y0092 (Hyeongmun Jang et al, "CE5-2.5 : De-block filtering with 4x4 chroma sample grid", JVET-Y0092, Gothenburg, July 2019) to build a HoG. Then, the intra prediction mode with the largest histogram amplitude value is selected from the HoG.

In variant, in DIMD chroma mode, an intra predictor of a chroma block may be derived based on neighboring reconstructed chroma samples.

In a variant, an intra predictor of a chroma block may be derived based on co-located reconstructed luma samples of a luma block associated with the chroma block to be predicted and on neighboring reconstructed chroma samples.

Usually, when the intra prediction mode derived from the DIMD chroma mode is the same as the intra prediction mode derived from the DM (direct mode) mode, the intra prediction mode with the second largest histogram amplitude value is selected as the DIMD chroma mode.

Derived intra modes are included into the primary list of intra most probable candidate modes (MPM), so the DIMD process is performed before the MPM list is constructed. The primary derived intra mode of a DIMD block is stored with a block and is used for MPM list construction of the neighboring blocks.

The region of neighboring reconstructed samples used for computing the histogram of gradients may be modified compared to JVET-O0449 method, depending on reconstructed samples availability. The region of decoded reference samples of current WxH luma CB may be extended towards the above-right side if available, up to W additional columns. It may be extended towards the bottom-left side if available, up to H additional rows.

A DIMD merge mode is also proposed in JVET-AF0120 (Saverio Blasi et al., "EE2-2.1 DIMD merge", JVET-AF0120, Hannover Oct. 2023). When using DIMD merge mode, a prediction block of the current block is derived from DIMD information that is extracted from neighbouring blocks of the current block. Firstly, a Merged Histogram of Gradients (MHoG) is computed for the current block based on the Histogram of Gradients HoG of at least one DIMD neighbouring block i.e. a neighboring block encoded/decoded based on a prediction block derived based on the DIMD or DIMD merge mode. When a single DIMD neighbouring block is available, then its histogram of gradients (HoG) is used to form the MHoG for the current block. If more than one DIMD neighbouring blocks are available, the corresponding HoGs are combined by means of amplitude averaging to derive the MHoG. Up to maximum 13 DIMD neighboring blocks are considered to extract DIMD information. Next, the MHoG is used to define DIMD merge modes and weights, as discussed above in relation with DIMD mode. The conventional intra angular modes and their weights corresponding to the five highest amplitudes in the MHoG are selected, and the corresponding predictors are blended as in DIMD merge mode.

The DIMD information used to derive a predictor of a current block depends on the DIMD neighboring blocks. In JVET-AF0106 (Junyan Huo et al., "EE2-related: Non-adjacent spatial candidates for DIMD merge", Hannover, oct. 2023), DIMD neighboring blocks may be non-adjacent spatial neighboring blocks, i.e. neighboring block of a current block that does not share a corner or a boundary with the current block.

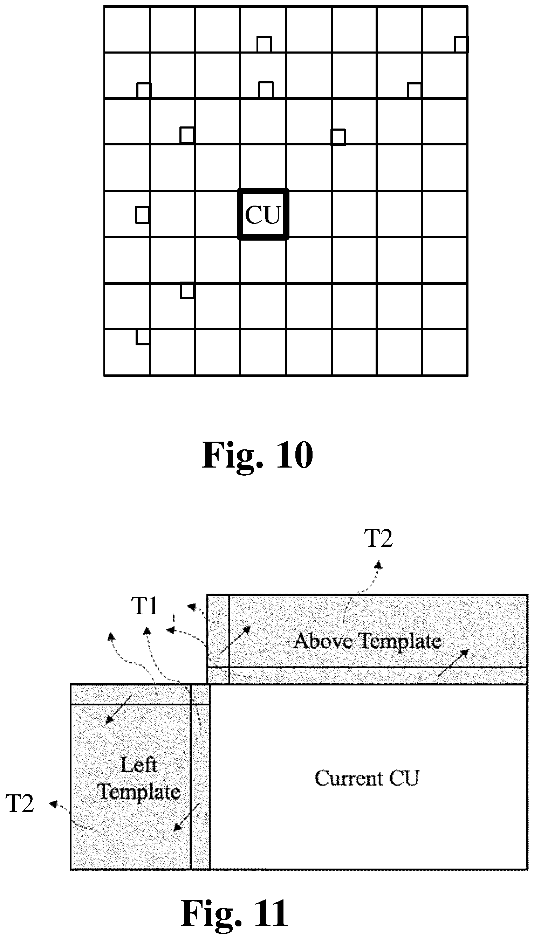

For example, **Figure 10** shows an example of definition of non-adjacent spatial neighboring blocks. The distances between non-adjacent spatial neighboring blocks of the current block and the current block may be defined based on the width and height of the current block.

A DIMD mode or DIMD merge mode (for luma or chroma) is associated with associated information such as weights as discussed above. Information associated with DIMD mode or DIMD merge mode may be stored in memory for a block of the video picture VP that is encoded/decoded based on a prediction block derived based on the DIMD mode or DIMD merge mode.

EMC further defines Template-based Intra Mode Derivation (TIMD) mode. A TIMD mode is used for predicting a block and leads to the derivation of an intra predictor of the block based on previously reconstructed samples of the video. A TIMD mode associated with a block is also associated with a prediction cost evaluated based on samples of a template defined around the block.

For example, a TIMD mode may be derived for each intra prediction candidate mode of the MPM list, as well as for each of the wide-angle modes if the above-right and/or bottom-left samples of a first template T1 are available. Wide angle modes are described in JVET-Q2002 (Algorithm description for Versatile Video Coding and Test Model 8 (VTM 8), JVET-Q2002, Brussels, 7-17 January 2020. In brief, conventional angular intra prediction directions are defined from 45 degrees to -135 degrees in clockwise direction. In VVC, several conventional angular intra prediction modes are adaptively replaced with wide-angle intra prediction modes for non-square blocks. The replaced modes are signaled using the original mode indexes, which are remapped to the indexes of wide angular modes after parsing. The number of replaced modes in wide-angular direction mode depends on the aspect ratio of a block. Two vertically adjacent predicted samples may use two non-adjacent reference samples in the case of wide-angle intra prediction. Hence, low-pass reference samples filter and side smoothing are applied to the wide-angle prediction to reduce the negative effect of the increased gap $\Delta p\alpha$. If a wide-angle mode represents a non-fractional offset. There are 8 modes in the wide-angle modes which satisfy this condition, which are [-14, -12, -10, -6, 72, 76, 78, 80]. When a block is predicted by these modes, the samples in the reference buffer are directly copied without applying any interpolation. With this modification, the number of samples needed to be smoothing is reduced. Besides, it aligns the design of non-fractional modes in the conventional prediction modes and wide-angle modes.

The prediction cost associated with a TIMD mode may be evaluated based on a Sum of Absolute Transformed Difference (SATD) or a Sum of Absolute Difference (SAD) or a Sum of Squared Errors (SSE) between samples of a second template T2 of the block and samples of a reconstructed template of the block. Samples of the reconstructed template of the block are samples located in the second template T2 of the block that are encoded and decoded based on the intra prediction candidate mode or on a wide-angle mode if exists. A list of DIMD candidate modes associated with prediction costs may then be built. Next, two intra prediction modes DIMD1 and DIMD2 with the minimum prediction cost are selected from the list of DIMD candidate modes. These two selected DIMD modes DIMD1 and DIMD2 are considered as being two TIMD modes TIMD1 and TIMD2. Next, a condition between the prediction costs of the two selected TIMD modes is checked to determine if a blending of these two selected TIMD modes is applied or not.

For example, the condition is fulfilled when the prediction cost of the second selected TIMD mode TIMD2 is lower than twice the prediction cost of the first selected TIMD mode TIMD1 (corresponding to the minimum prediction cost): cost (TIMD2 < 2*cost(TIMD1). If the condition is fulfilled, a fusion is applied, otherwise the TIMD mode added to the MPM list is the first TIMD mode TIMD1.

**Figure 11** shows an example of the first template T1 of a block (current CU) used for template prediction, and an example of the second template used for calculating a prediction cost. PDPC weights are obtained by applying a PDPC (Position dependent intra prediction combination) filtering to the predictions derived based on the two selected TIMD modes. The PDPC weights are similar to what is used in VVC's PDPC process where the weights depend on the block dimensions. The predictions derived based on the two selected TIMD modes may then be blended with the PDPC weights such weighted intra prediction is used to code the current block.

The weights may be computed from their prediction costs as follows:

$$weight1 = costMode2 / (costMode1 + costMode2)$$

weight2 = 1 - weight1TIMD mode may then be associated with information that may indicate the two selected TIMD modes and the fusion (blending) flag indicating if the blending of the two selected TIMD modes is enabled. Said associated information may also indicate the weights weight1 and weight2 and/or the prediction cost. Information associated with TIMD mode may be stored in memory for a block of the video picture VP that is encoded/decoded based on a prediction block derived based on the TIMD mode.

TIMD merge mode is an intra coding tool based on regular TIMD with an exception that TIMD merge keeps a merge list of TIMD merge mode candidates that are collected as already coded blocks from causal neighbourhood. The list of merge candidates comprises at least one intra mode derivation candidate, i.e. at least one DIMD and/or TIMD mode, and associated information for intra-predicting a current block of a video picture VP. The at least one DIMD and/or TIMD mode candidates is collected from at least one previously (de)coded block which is predicted using either TIMD mode or DIMD mode or TIMD merge mode or DIMD merge mode. Each TIMD merge mode candidate may contain at least one internal prediction mode of a DIMD or TIMD mode and their associated information. Each TIMD merge mode candidate is used for intra-prediction of a previously (de)coded block. The TIMD merge mode for intra-predicting the current block is determined by selecting one TIMD merge mode candidate of the merge list of TIMD merge mode candidate based on predicting costs obtained for the TIMD merge mode candidates of the merge list.

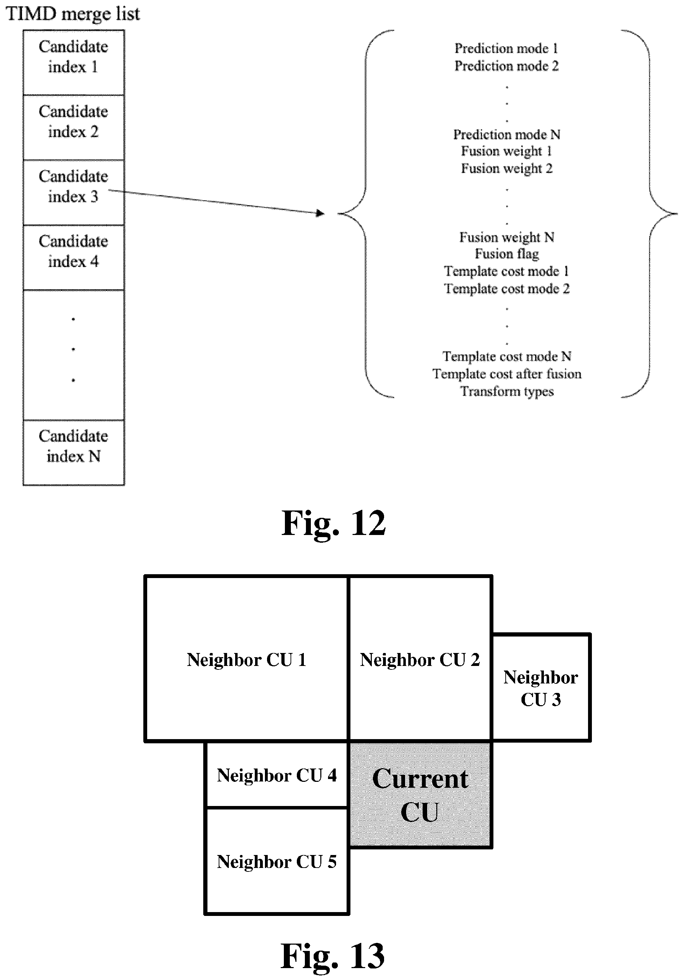

**Figure 12** illustrates an example of a TIMD merge list and examples of information associated to each TIMD merge mode candidate of the TIMD merge list in accordance with some embodiments.

In the example the TIMD merge list comprises N TIMD merge mode candidates associated with indices 'candidate index 1' to 'candidate index N'.

Each TIMD merge mode candidate comprises at least one internal prediction mode with associated information used for intra-prediction one previously coded or decoded block. For example, the TIMD merge mode candidate with the index 'candidate index 3' comprises a list of internal prediction modes with associated information.

- prediction mode 1, 2, N: the main intra prediction mode (could be any angular or non-angular mode) usually has the highest fusion weight among the multiple TIMD modes;
- fusion weight 1, 2 N: the rest of the intra modes (could be any angular or non-angular modes) which have lower fusion weights than primary mode;
- fusion flag: a flag indicating whether the primary mode and fusion modes are blended or not;
- template cost mode 1, 2, N: the prediction cost of for example each primary and fusion modes over the defined template;
- transform types: the transform type used for the TIMD coded block.

- wide angle conditions indicate whether each candidate (primary and/or fusion modes) are wide angle modes or not.

The TIMD merge list may contain only the TIMD merge mode candidates from its immediate spatially neighboring blocks (aka adjacent candidates), or the TIMD merge list may contain only candidates from non-adjacent blocks. Alternatively, the TIMD merge list may contain both adjacent and non-adjacent candidates.

**Figure 13** illustrates examples of adjacent and non-adjacent blocks that are checked for generating the TIMD merge list of TIMD merge mode candidates.

The encoder may test one or more of the TIMD merge candidates in the TIMD merge list and the best performing candidate (and associated information) according to the rate-distortion optimization (RDO) mechanism may be selected and used for prediction of the current block.

Selecting the TIMD merge mode as candidate for intra-prediction of a current block of the video picture VP among TIMD merge mode candidates of the TIMD merge list avoids derivation of TIMD or DIMD modes that would contain noise because the TIMD or DIMD modes have been previously selected for predicting other blocks of the video picture VP (that comprises the current block to be predicted) or previous encoded/decoded video pictures.

Current TIMD algorithm (like most other coding tools) in the ECM uses regular Multiple Transform Selection (MTS) to determine the separable transform type for horizontal and vertical residual transformation. This includes an encoder-side search for the best index and then signaling it at the block level. However, TIMD merge algorithm proposes a method to derive the transform type along with prediction information (intra modes, wide-angle etc.) from one of the candidates in the TIMD merge list. This is the so-called Transform Inheritance in TIMD-Merge.

There are mainly three advantages in implicitly deriving the transform type. First, the encoder no longer needs to exhaustively search for the optimal transform index, which makes the encoding faster. Second, the transform index no longer needs to be signaled, which can save bitrate and potentially increase the compression efficiency. Third, the transform derivation can possibly result in a combination of horizontal and vertical transform types that are not presented by either of available transform indexes. This can potentially result in better compression efficiency.

In order to inherit transform type from a neighbor CU, TIMD merge constructs a merge list of transform candidates that is associated to the TIMD merge list (list of TIMD merge mode candidates) and is filled accordingly. This merge list of transform candidates is based on the same neighboring CUs that contribute to the construction of the TIMD merge list. In particular, when a CU is added to the TIMD merge list of current CU, a pair of its transform types (i.e. horizontal and vertical) is also associated to the corresponding transform candidate in the merge list of transform candidates. Then, once the best candidate is selected based on the algorithm of the TIMD merge, the transform pair of the merge list of transform candidates corresponding to the best candidate is also inherited to be used for the current TIMD merge CU.

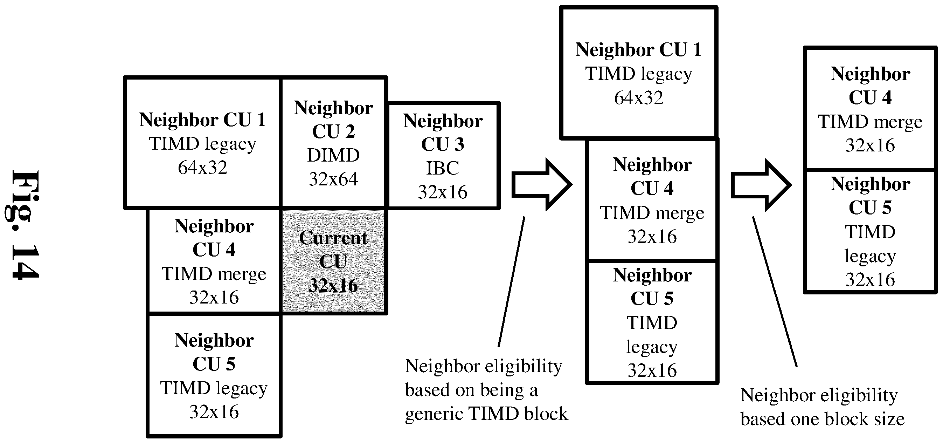

**Figure 14** illustrates an example of inheriting horizontal and vertical transform types from a neighbor CU by TIMD-merge.

In a first step, three TIMD neighbor CUs are eligible. Then in a second step, two TIMD neighbor CU4 and CU5 are selected based on block size. For example, the neighbor CU4 is selected by the TIMD merge algorithm to provide intra prediction modes and transform types associated with neighbor CU4 are inherited for current TIMD merge block.

Embodiments of the present disclosure relate to a method of coding a block of picture comprising:

- applying a transform on residual block of the block of picture obtained based on the block of picture and a prediction block,
- the prediction block being derived based on merge-based prediction mode relying on neighboring blocks to derive prediction parameters used for coding the block of picture and inherited transform type associated with the prediction parameters.

Embodiments of the present disclosure further relate to a method of decoding a block of picture comprising:

- applying an inverse transform on residual block of the block of picture obtained based on the block of picture and a prediction block,
- the prediction block being derived based on merge-based prediction mode relying on neighboring blocks to derive prediction parameters used for decoding the block of picture and inherited transform type associated with the prediction parameters,. For the coding (or decoding) method, wherein a decision is made to indicate whether the applied transform or inverse transform on residual block either uses the inherited transform type or a derived transform type that is different from the inherited transform type..

The present disclosure improves the current inheritance transform type method as defined in ECM and helps merge-based prediction modes, such as TIMD merge mode to implicitly replace transform types as inherited by the current inheritance transform type method by other transform type if certain conditions are fulfilled.

The present disclosure proposes an improvement based on implicit transform type selection that can be applied on different merge-based prediction modes. A merge-based prediction mode is defined as prediction mode that relies on neighbouring CUs to derive its prediction parameters such as intra prediction mode, motion vector, block vector etc. However, the present disclosure puts the focus on TIMD-merge mode as an example of merge-based prediction mode. Without loss of generality, different aspects described for TIMD-merge could be applied to other merge-based prediction modes.

The common aspect of the present disclosure with state-of-the-art TIMD-merge is that the present disclosure still bypasses the signalling of the transform type index. However, the difference is that the present disclosure derives the transform type from other information than the selected candidate of the TIMD-merge.

In the rest of the present disclosure, neighboring CUs indicates CUs (blocks) located in a causal neighborhood of the block of picture to be coded (or decoded). A causal neighborhood indicates a set of blocks that are already (previously) coded or decoded, i.e. coded or decoded before the coding or decoding of the block of picture. Neighboring TUs indicate Transform Unit associated with neighboring CUs. The term "inherited transform" refers to the transform type that has been chosen by current TIMD-merge mode through selecting one of its candidate CUs and inheriting its transform type.

Moreover, the term "derived transform" refers to the implicit transform type that embodiments of the present discourse propose and is imperatively different from inherited transform.

Furthermore, in cases where the proposed method is adapted for non-TIMD-merge coding modes, the term "default transform" will refer to the existing choice of transform type selected by the underlying coding mode / codec. For example, in lack of explicit transform information, ECM uses DCT-2 as its "default transform". Subsequently, the term "derived transform" refers to an alternative transform type, proposed by embodiments of the present disclosure, that would replace the default transform. And again, the derived transform has to be different from the default transform type when applied on non-TIMD-merge coding modes.

In other words, depending on whether the CU (block of picture) is predicted using TIMD-merge mode, i.e. TIMD-merge CU) or not, the transform type to be replaced is either called "inherited transform" (for TIMD-merge CUs) or "default transform" (for non-TIMD-merge CUs). In either case, the new transform type is referred to as the "derived transform". This "derived transform" is always derived implicitly.

In some embodiments, the transform type associated with prediction parameters is inherited from transform type associated with at least one of the neighboring blocks.

Embodiments of the present disclosure relate to the case where the merge-based prediction mode is a TIMD merge mode. The current TIMD-merge mode with transform inheritance is then modified in order to overwrite/replace the inherited transform type from TIMD-merge candidate by a different transform type that is also derived implicitly.

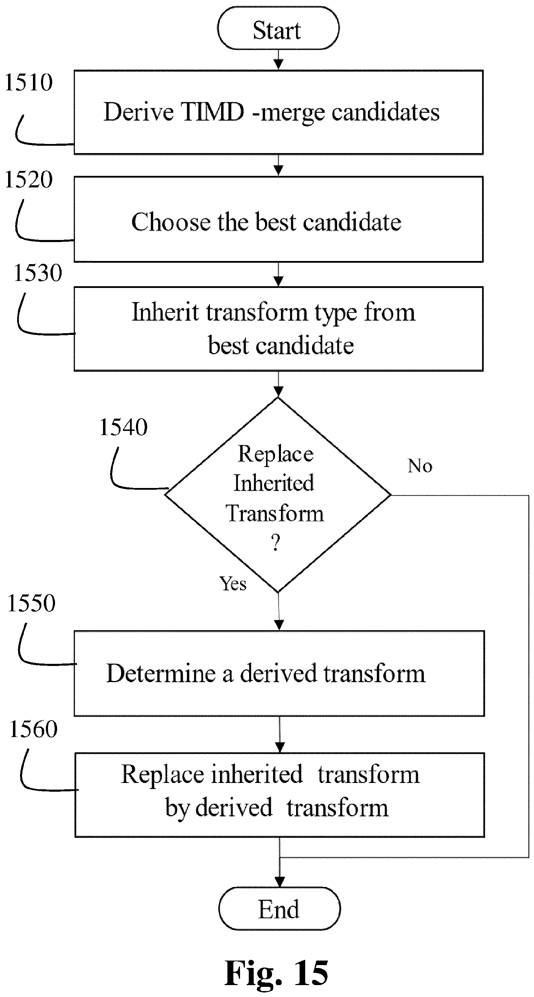

**Figure 15** illustrates schematically a block diagram of a method for replacing inherited transform type by derived transform type when merge-based prediction mode is TIMD-merge mode, according to embodiments. For example, method of **Figure 15** may be performed by an encoder or a decoder. In some example, blocks 1510-1560 may represent components within the encoder or the decoder. For example, blocks 1510-1560 may be parts of the step 120 (**Figure 5**) or step 250 (**Figure 6**).

In block 1510, TIMD-merge candidates are derived.

In block 1520, the best TIMD-merge candidate is selected from the derived TIMD-merge candidates.

In block 1530, transform type associated with the current block of the video picture VP is inherited from the best TIMD-merge candidate, i.e. the transform type associated with TIMD-merge CU equal the transform type of the best TIMD-merge candidate.

In block 1540, a decision is made to indicate whether the inherited transform type associated with the TIMD-merge CU should be replaced.

If yes, in block 1550, derived transform type is determined and in block 1560, the inherited transform type is replaced by the derived transform type. Otherwise, the methods ends.

There are different embodiments to determine (block 1540) the condition to trigger replacing the inherited transform type by the derived transform type, i.e. to make the decision.

In some embodiments, the decision on based on whether a condition based on either the width, the height and/or both the with and the height of the CU or the either the width, the height and/or both the with and the height of the TU is fulfilled.

In some embodiments, the condition is based on a comparison of the either the width, the height and/or both the with and the height of the block of picture (CU size) or either the width, the height and/or both the with and the height of a transform unit (TU size) with at least one threshold.

In some embodiments, at least two thresholds define a CU/TU size interval.

For example, the condition is fulfilled when the TU size interval is between 4 and 16 residual pixels.

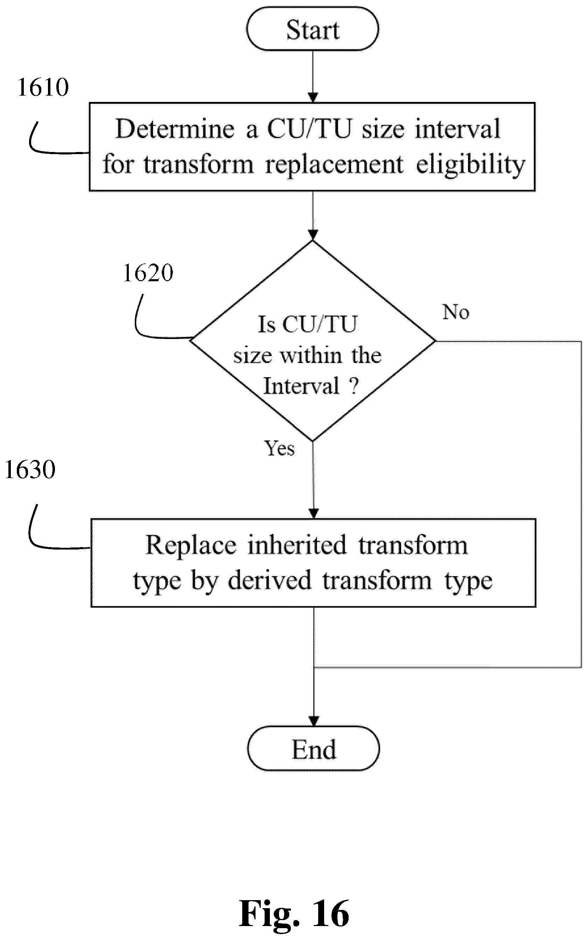

**Figure 16** illustrates how the CU/TU size may be used to determine whether inherited transform type should be replaced by the derived transform type, according to embodiments. For example, method of **Figure 16** may be performed by an encoder or a decoder. In some example, blocks 1610-1630 may represent components within the encoder or the decoder. For example, blocks 1610-1630 may be parts of the step 120 (**Figure 5**) or step 250 (**Figure 6**).

In block 1610, a CU/TU size (i.e. the either the width, the height and/or both the with and the height of CU/TU) interval (with two thresholds) is determined.

In block 1620, a decision is made to indicate whether the CU/TU size is within the interval.

If yes, in block 1630, the inherited transform type is replaced by the derived transform type. Otherwise, the method ends.

In some embodiments, the decision is based on a condition on transform types chosen for the neighboring blocks of the block of picture, i.e. one can refer to the choice of transform type in the neighborhood of the block of picture to determine whether or not the inherited transform type is replaced.

In some embodiments, the condition is based on a comparison of a metric of diversity of transform types chosen for the neighboring blocks of the block of picture with a threshold.

For example, the metric of diversity may indicate that these choices are too diverse, i.e. the texture of the previously coded or decoded neighboring blocks of the block of picture is not reliable for inheriting transform type. Therefore, the inherited transform type of TIMD-merge is then replaced by an implicitly derived transform type.

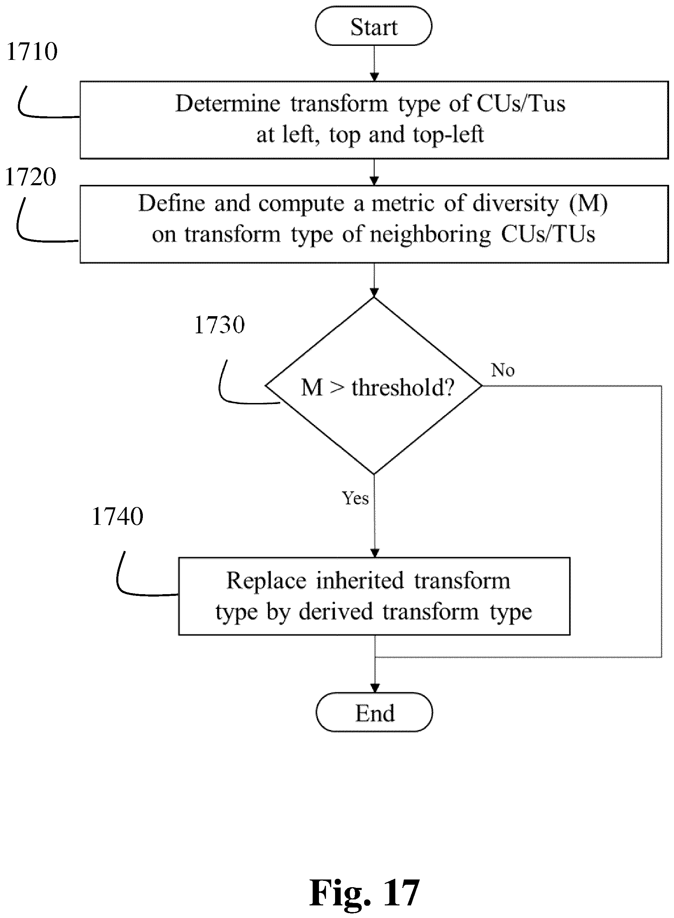

**Figure 17** illustrates an example of how to determine whether or not replace the inherited transform, based on the neighboring CUs/TUs, according to embodiments. For example, method of **Figure 17** may be performed by an encoder or a decoder. In some example, blocks 1710-1740 may represent components within the encoder or the decoder. For example, blocks 1710-1740 may be parts of the step 120 (**Figure 5**) or step 250 (**Figure 6**).

In block 1710, transform type of neighboring (for example left, top and top-left or other adjacent positions) CUs/TUs of TIMD-merge CU (block of picture) are determined.

In block 1720, a metric of diversity (M) on transform type of neighboring CUs/TUs is defined and computed.

For example, transform types are associated with indexes of a set of indices and the metric of diversity (M) is a maximum distance between indexes associated to the transform type chosen for the previously coded neighboring blocks.

For example, the metric of diversity (M) may be an average distance between indices associated to the transform type chosen for the previously coded neighboring blocks.

For example, the number of distinct transform types on neighboring blocks is computed. Then this number is compared to the number of neighboring blocks that have been checked (e.g. three blocks in above example). Then the metric M may be defined as the ratio of the number of distinct transform types to the number of checked neighboring blocks. Finally, if M > 0.5, can trigger the replace condition. Since it indicates that there is no consensus on transform type in neighboring blocks as they are coded (or decoded) with too many different transform types.

In block 1730, a decision is made to indicate whether the metric M is greater than a threshold.

If yes, in block 1730, transform type is replaced by derived transform type of TIMD-merge CU.

In some embodiments, the decision is based on the nature of the transform type associated with the prediction block (of the block of picture to be coded).

In some embodiments, the transform type associated with prediction parameters is inherited from transform type associated with at least one of the neighboring blocks.

may be chosen. It replace systematically TS.

There are several embodiments to determine (block 1550) the derived transform.

In some embodiments, the derived transform may be fixed to a certain transform type.

For instance, one can fix the derived transform type to DST-7 (which is different from the main default transform type DCT-2 in ECM). Then, based on the replace conditions (block 1540), the algorithm decides whether to replace the inherited transform by DST-7.

Alternatively, in some embodiments, the derived transform type may vary depending on different characteristics of the TIMD-merge CU (block of the picture to be coded).

For example, if the choice of transform type in the neighborhood is very coherent (almost same choice), while TIMD-merge has inherited a different transform type, then replace the inherited transform type by the dominant transform type in the neighborhood. This can happen when TIMD-merge chooses a non-adjacent CU candidate.

In some embodiments, decision of replacing the inherited transform type is made for each transform direction, i.e. a decision is made for replacing (or not) horizontal transform type and another decision is made for replacing (or not) the vertical transform type.

This embodiment only deals with separable transforms, where the horizontal and vertical directions are transformed independently. As a result, this embodiment leads to choice between different combinations of horizontal and vertical transform replacement.

In some embodiments, the decision on whether or not to replace the inherited transform is made independently of each direction.

For example, one can replace the horizontal transform type while keeping the vertical inherited transform.

In a variant of this last embodiment, one might also consider applying the above approach when the explicit signaling of the Multiple Transform Selection (MTS) is also applied on the CU (block of picture to be coded).

More precisely, one can replace the "explicitly signaled" transform type of TIMD-merge only for horizontal direction, while keeping the explicitly signaled transform from the TIMD-merge. Note that in this particular example, the transform inheritance aspect of TIMD-merge has been deactivated.

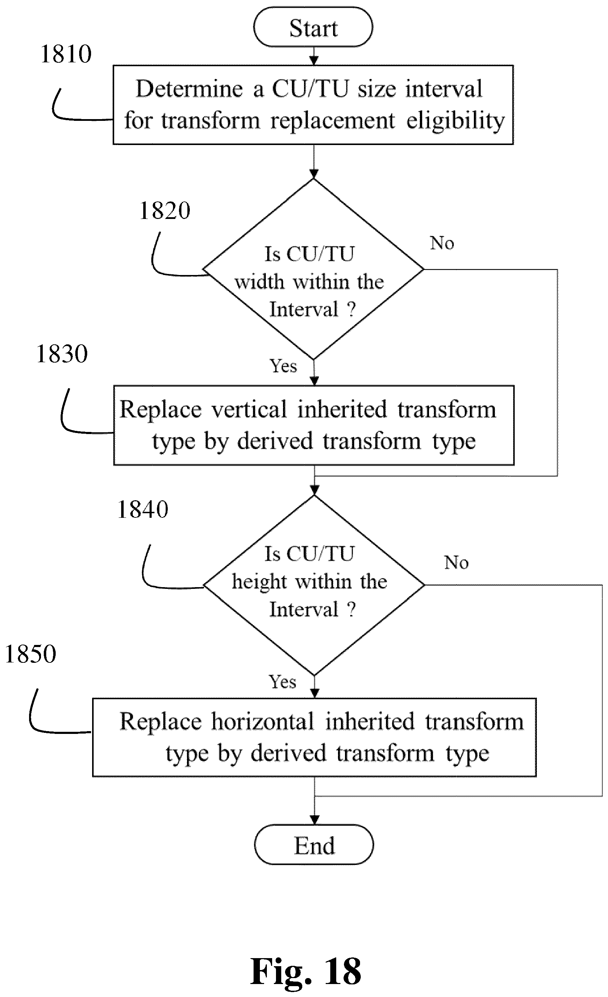

**Figure 18** illustrates how each transform direction can be replaced independently, according to embodiments. For example, method of **Figure 18** may be performed by an encoder or a decoder. In some example, blocks 1810-1850 may represent components within the encoder or the decoder. For example, blocks 1810-1850 may be parts of the step 120 (**Figure 5**) or step 250 (**Figure 6**).

In block 1810, CU/TU size interval is determined for transform replacement eligibility.

In block 1820, a decision is made to indicate whether CU/TU width is within the CU/TU size interval.

If yes, in block 1830, vertical inherited transform type is replaced by derived transform type. Otherwise, vertical inherited transform type remains unchanged.

In block 1840, a decision is made to indicate whether CU/TU height belongs within a CU/TU size interval.

If yes, the horizontal inherited transform type is replaced by the derived transform type. Otherwise, the horizontal transform type remains unchanged.

In some embodiments, either both horizontal and vertical transforms are replaced together, or none of them is replaced.

For example, one can apply a size-based replace condition on each side (i.e. width and height). Then if at least one of them is met, then both horizontal and vertical transform types are replaced.

Given above description of different aspects of implicit transform derivation for TIMD-merge, the following pseudo-code illustrates a full example of implementation of the proposed implicit transform type derivation for TIMD-merge mode at the decoder side that incorporates several of above embodiments.

```
1.   C: Current Coding Unit (CU) that has been coded with TIMD-merge
2.   T: A Transform Unit (TU) that is associated with C
3.   W: Width of T
4.   H: Height of T
5.   L: Derive TIMD-merge candidate list for C
6.   D: From L, select the best candidate for C
7.   TrD_hor and TrD_hor : From D, fetch the horizontal and vertical transform
8.     // Inherit the fetched transform types for C
9.   TrC_hor ← TrD_hor
10.  TrC_hor ← TrD_hor
11.    // Determine an implicitly derived transform type, denoted as TrV
12.  TrV ← DST-7
13.  minSize ← 4
14.  maxSize ← 16
15.  IF W >= minSize and W <= maxSize, THEN DO:
16.        TrC_ver ← TrV
17.  END IF
18.  IF H >= minSize and H <= maxSize, THEN DO:
19.        TrC_hor ← TrV
20.  END IF
21.  Apply horizontal and vertical inverse transforms, using TrC_hor and TrC_ver , respectively
```

The present disclosure further proposes an improvement based on implicit transform type selection that can be applied on merge-based prediction modes that are different from the TIMD-merge mode, i.e. on non-TIMD prediction modes.

All above aspects described in relations with **Figures 15-18** and the above derivation of transform type can be adapted for non-TIMD prediction modes.

In those cases, the present disclosure removes the explicit transform type signalling from underlying coding tool. By doing so, the impacted CUs may use a default transform type (e.g. DCT-2). In other words, the transform type associated with prediction parameters is default transform type. Then, the present disclosure replaces the default transform type by an implicitly derived transform type that is different from the default transform type.

In some embodiments, the above aspects may be adapted to non-TIMD-merge modes by disabling explicit MTS. In a first step, the above aspects may remove the explicit MTS signaling. By doing so, the transform type may be selected as default transform type such DCT-2 for example. In a second step, the default transform type may be conditionally replaced by another implicit transform type, aka derived transform type. For that, all above aspects could be applied (decisions, derivation of derived transform type, etc.).

In some embodiments, disabling the explicit MTS may be conditional to CU characteristics, such as coding tool, size etc.

For example, one can disable the explicit MTS (to apply the second step described above) only if CU is smaller than 16x16 and it is coded by Matrix-based Intra Prediction (MIP).

In some embodiments, the above aspects may be adapted to keeping explicit MTS enabled while replacing only one transform.

For instance, in one scenario, when the explicit MTS of current CU of the video picture VP of 8x32 indicates transform DCT-5 and DCT-8 for horizontal and vertical transforms, respectively, one can check the CU size and determine to replace the vertical transform by DST-7, since the width of the CU is smaller than 16. Note that in this example, the parsing of the MTS signaling information is intact and the decision to replace transform type is made after it.

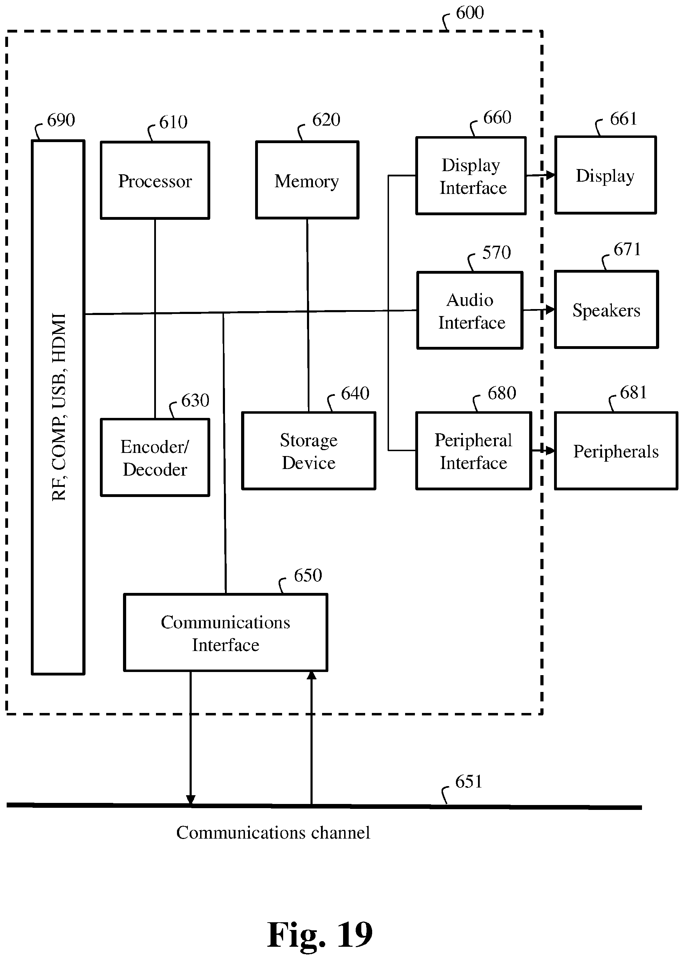

**Figure 19** shows a schematic block diagram illustrating an example of a system 600 in which various aspects and exemplary embodiments are implemented.

System 600 may be embedded as one or more devices including the various components described below. In various exemplary embodiments, system 600 may be configured to implement one or more of the aspects described in the present application.

Examples of equipment that may form all or part of the system 600 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 600, singly or in combination, may be embodied in a single integrated circuit (IC), multiple ICs, and/or discrete components. For example, in at least one exemplary embodiment, the processing and encoder/decoder elements of system 600 may be distributed across multiple ICs and/or discrete components. In various exemplary embodiments, system 600 may be communicatively coupled to other similar systems, or to other electronic devices, via, for example, a communications bus or through dedicated input and/or output ports.

System 600 may include at least one processor 610 configured to execute instructions loaded therein for implementing, for example, the various aspects described in the present application. Processor 610 may include embedded memory, input output interface, and various other circuitries as known in the art. System 600 may include at least one memory 620 (for example a volatile memory device and/or a non-volatile memory device). System 600 may include a storage device 640, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 640 may include an internal storage device, an attached storage device, and/or a network accessible storage device, as non-limiting examples.

System 600 may include an encoder/decoder module 630 configured, for example, to process data to provide encoded/decoded video picture data, and the encoder/decoder module 630 may include its own processor and memory. The encoder/decoder module 630 may represent module(s) that may be included in a device to perform the encoding and/or decoding functions. As is known, a device may include one or both encoding and decoding modules. Additionally, encoder/decoder module 630 may be implemented as a separate element of system 600 or may be incorporated within processor 610 as a combination of hardware and software as known to those skilled in the art.

Program code to be loaded onto processor 610 or encoder/decoder 630 to perform the various aspects described in the present application may be stored in storage device 640 and subsequently loaded onto memory 620 for execution by processor 610. In accordance with various exemplary embodiments, one or more of processor 610, memory 620, storage device 640, and encoder/decoder module 630 may store one or more of various items during the performance of the processes described in the present application. Such stored items may include, but are not limited to video picture data, information data used for encoding video picture data, a bitstream, matrices, variables, and intermediate or final results from the processing of equations, formulas, operations, and operational logic.

In several exemplary embodiments, memory inside of the processor 610 and/or the encoder/decoder module 630 may be used to store instructions and to provide working memory for processing that may be performed during encoding or decoding.

In other exemplary embodiments, however, a memory external to the processing device (for example, the processing device may be either the processor 610 or the encoder/decoder module 630) may be used for one or more of these functions. The external memory may be the memory 620 and/or the storage device 640, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 600 may be provided through various input devices as indicated in block 690. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 690 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 610 as necessary. Similarly, aspects of USB or HDMI interface processing may be implemented within separate interface ICs or within processor 610 as necessary. The demodulated, error corrected, and demultiplexed stream may be provided to various processing elements, including, for example, processor 610, and encoder/decoder 630 operating in combination with the memory and storage elements to process the data stream as necessary for presentation on an output device.

Various elements of system 600 may be provided within an integrated housing. Within the integrated housing, the various elements may be interconnected and transmit data therebetween using suitable connection arrangement 690, for example, an internal bus as known in the art, including the I2C bus, wiring, and printed circuit boards.

The system 600 may include communication interface 650 that enables communication with other devices via communication channel 651. The communication interface 650 may include, but is not limited to, a transceiver configured to transmit and to receive data over communication channel 651. The communication interface 650 may include, but is not limited to, a modem or network card and the communication channel 651 may be implemented, for example, within a wired and/or a wireless medium.

Data may be streamed to system 600, in various exemplary embodiments, using a Wi-Fi network such as IEEE 802.11. The Wi-Fi signal of these exemplary embodiments may be received over the communications channel 651 and the communications interface 650 which are adapted for Wi-Fi communications. The communications channel 651 of these exemplary embodiments may be typically connected to an access point or router that provides access to outside networks including the Internet for allowing streaming applications and other over-the-top communications.

Other exemplary embodiments may provide streamed data to the system 600 using a set-top box that delivers the data over the HDMI connection of the input block 690.

Still other exemplary embodiments may provide streamed data to the system 600 using the RF connection of the input block 690.

The streamed data may be used as a way for signaling information used by the system 600. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 600 may provide an output signal to various output devices, including a display 661, speakers 671, and other peripheral devices 681. The other peripheral devices 681 may include, in various examples of exemplary embodiments, one or more of a stand-alone DVR, a disk player, a stereo system, a lighting system, and other devices that provide a function based on the output of system 600.

In various exemplary embodiments, control signals may be communicated between the system 600 and the display 661, speakers 671, or other peripheral devices 681 using signaling such as AV.Link (Audio/Video Link), CEC (Consumer Electronics Control), or other communications protocols that enable device-to-device control with or without user intervention.

The output devices may be communicatively coupled to system 600 via dedicated connections through respective interfaces 660, 670, and 680.

Alternatively, the output devices may be connected to system 600 using the communications channel 651 via the communications interface 650. The display 661 and speakers 671 may be integrated in a single unit with the other components of system 600 in an electronic device such as, for example, a television.

In various exemplary embodiments, the display interface 660 may include a display driver, such as, for example, a timing controller (T Con) chip.

The display 661 and speaker 671 may alternatively be separate from one or more of the other components, for example, if the RF portion of input 690 is part of a separate set-top box. In various exemplary embodiments in which the display 661 and speakers 671 may be external components, the output signal may be provided via dedicated output connections, including, for example, HDMI ports, USB ports, or COMP outputs.

In **Figures 1-18,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 610 or by hardware, or by a combination of hardware and software. As a non-limiting example, the exemplary embodiments may be also implemented by one or more integrated circuits. The memory 620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 610 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. -For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments.

While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of coding a block of picture comprising:

   - applying a transform on residual block of the block of picture obtained based on the block of picture and a prediction block,
   - the prediction block being derived based on merge-based prediction mode relying on neighboring blocks to derive prediction parameters used for coding the block of picture and inherited transform type associated with the prediction parameters,

   wherein a decision is made to indicate whether the applied transform on residual block either uses the inherited transform type or a derived transform type that is different from the inherited transform type.

2. A method of decoding a block of picture comprising:

   - applying an inverse transform on residual block of the block of picture obtained based on the block of picture and a prediction block,
   - the prediction block being derived based on merge-based prediction mode relying on neighboring blocks to derive prediction parameters used for decoding the block of picture and inherited transform type associated with the prediction parameters, wherein a decision is made to indicate whether the applied inverse transform on residual block either uses the inherited transform type or a derived transform type that is different from the inherited transform type.

3. The method of claim 1 or 2, wherein the decision is based on whether a condition on either the width, the height and/or both the with and the height of the block of picture or either the width, the height and/or both the with and the height of a transform unit is fulfilled.

4. The method of claim 3, wherein the condition is based on a comparison of either the width, the height and/or both the with and the height of the block of picture or the either the width, the height and/or both the with and the height of the transform unit with at least one threshold.

5. The method of claim 4, wherein at least two thresholds define a block of picture or transform size interval.

6. The method of claim 5, wherein the transform unit size interval is between 4 and 16 residual pixels.

7. The method of claim 1 or 2, wherein the decision is based on a condition on transform types chosen for the neighboring blocks of the block of picture.

8. The method of claim 7, wherein the condition is based on a comparison of a metric of diversity of transform types chosen for the neighboring blocks of the block of picture with a threshold.

9. The method of claim 7 or 8, wherein the neighboring blocks are located at left, top and top-left or other adjacent positions of the block of picture.

10. The method of claim 2, wherein the decision is based on the nature of the transform type associated with the prediction block.

11. The method of one of claims 2 to 10, wherein the transform applied on residual of the block of picture being a separable transform, and wherein the decision is made for each transform direction.

12. The method of claim 11, wherein the decision is made for each direction independently to each other.

13. The method of one of claims 1 to 12, wherein the derived transform type is fixed to a certain transform type.

14. The method of claim 13, wherein the certain transform type is DST-7.

15. The method of one of claims 1 to 12, wherein the derived transform type is based on characteristics of the block of picture.

16. The method of one of claims 1 to 15, wherein the merge-based prediction mode is a TIMD-merge mode.

17. The method of claim 1 to 16, wherein the transform type associated with prediction parameters is default transform type.

18. The method of one of claims 1 to 16, wherein the transform type associated with prediction parameters is inherited from transform type associated with at least one of the neighboring blocks.

19. An apparatus comprising means for performing one of the methods claimed in any one of claims 1 to 18.

20. A computer program product including instructions which, when the program is executed by one or more processors, causes the one or more processors to carry out a method claimed in any one of claims 1 to 18.

21. A non-transitory storage medium carrying instructions of program code for executing a method claimed in any one of claims 1 to 18.

**Fig. 1**

**Fig. 2**

# Fig. 3

SBTV  SBTH  STTV  STTH

# Fig. 4

**Fig. 5**

**Fig. 6**

**Fig. 7**

**Fig. 8**

the collocated reconstructed luma samples                    the current chroma block

**Fig. 9**

**Fig. 10**

**Fig. 11**

TIMD merge list

| |
|---|
| Candidate index 1 |
| Candidate index 2 |
| Candidate index 3 |
| Candidate index 4 |
| . . . |
| Candidate index N |

Prediction mode 1
Prediction mode 2
.
.
.
Prediction mode N
Fusion weight 1
Fusion weight 2
.
.
.
Fusion weight N
Fusion flag
Template cost mode 1
Template cost mode 2
.
.
.
Template cost mode N
Template cost after fusion
Transform types

## Fig. 12

| Neighbor CU 1 | Neighbor CU 2 | |
|---|---|---|
| | | Neighbor CU 3 |
| Neighbor CU 4 | Current CU | |
| Neighbor CU 5 | | |

## Fig. 13

**Fig. 14**

**Fig. 15**

Fig. 16

1710

Start

Determine transform type of CUs/Tus
at left, top and top-left

1720

Define and compute a metric of diversity (M)
on transform type of neighboring CUs/TUs

1730

M > threshold?    No

Yes

1740

Replace inherited transform
type by derived transform type

End

## Fig. 17

**Fig. 18**

600

690

610

620

660

661

Processor

Memory

Display
Interface

Display

RF, COMP, USB, HDMI

570

671

Audio
Interface

Speakers

630

640

680

681

Encoder/
Decoder

Storage
Device

Peripheral
Interface

Peripherals

650

Communications
Interface

651

Communications channel

**Fig. 19**

Europäisches Patentamt

European Patent Office

Office européen des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/104476 A1 (DOUYIN VISION CO LTD [CN]; BYTEDANCE INC [US]) 23 May 2024 (2024-05-23) * page 15 - page 102; figure 4 * ----- | 1-21 | INV. H04N19/12 H04N19/157 H04N19/176 H04N19/463 H04N19/593 |
| X | US 2021/076043 A1 (ZHANG LI [US] ET AL) 11 March 2021 (2021-03-11) * page 7 - page 454 * ----- | 1,2,7, 13-15, 17-21 | |
| X | ABDOLI (XIAOMI) M ET AL: "EE2-2.1: TIMD merge mode", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0075 ; m67143 16 April 2024 (2024-04-16), XP030317310, Retrieved from the Internet: URL:https://jvet-experts.org/doc_end_user/documents/34_Rennes/wg11/JVET-AH0075-v2.zip JVET-AH0075_v2.docx [retrieved on 2024-04-16] * the whole document * ----- -/-- | 1,2, 19-21 | TECHNICAL FIELDS SEARCHED (IPC) H04N |

The present search report has been drawn up for all claims

| Place of search | Date of completion of the search | Examiner |
|---|---|---|
| Munich | 3 March 2025 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 30 6272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | ABDOLI (XIAOMI) M ET AL: "EE2-2.1/EE2-2.5: Merge-based intra prediction", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0110 5 July 2024 (2024-07-05), XP030320306, Retrieved from the Internet: URL:https://jvet-experts.org/doc_end_user/ documents/35_Sapporo/wg11/JVET-AI0110-v1.z ip JVET-AI0110-v1.docx [retrieved on 2024-07-05] * the whole document * ----- | 1,2, 19-21 | |

TECHNICAL FIELDS
SEARCHED    (IPC)

The present search report has been drawn up for all claims

| Place of search | Date of completion of the search | Examiner |
|---|---|---|
| Munich | 3 March 2025 | Cyranka, Oliver |

EPO FORM 1503 03.82 (P04C01)

page 2 of 2

EP 4 676 045 A1

## ANNEX TO THE EUROPEAN SEARCH REPORT
## ON EUROPEAN PATENT APPLICATION NO.

EP 24 30 6272

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2025

| Patent document cited in search report | Publication date | Patent family member(s) | | Publication date |
|---|---|---|---|---|
| WO 2024104476 A1 | 23-05-2024 | NONE | | |
| US 2021076043 A1 | 11-03-2021 | CN | 110839158 A | 25-02-2020 |
| | | CN | 110839159 A | 25-02-2020 |
| | | EP | 3815363 A1 | 05-05-2021 |
| | | JP | 7313427 B2 | 24-07-2023 |
| | | JP | 7481538 B2 | 10-05-2024 |
| | | JP | 2021536169 A | 23-12-2021 |
| | | JP | 2023104947 A | 28-07-2023 |
| | | KR | 20210045387 A | 26-04-2021 |
| | | TW | 202021351 A | 01-06-2020 |
| | | TW | 202034698 A | 16-09-2020 |
| | | US | 2021076038 A1 | 11-03-2021 |
| | | US | 2021076043 A1 | 11-03-2021 |
| | | US | 2021329242 A1 | 21-10-2021 |
| | | WO | 2020035827 A1 | 20-02-2020 |
| | | WO | 2020035829 A1 | 20-02-2020 |

EPO FORM P0459

For more details about this annex : see Official Journal of the European Patent Office, No. 12/82

38

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M. ABDOLI et al.** Non-CE3: Decoder-side Intra Mode Derivation with Prediction Fusion Using Planar. *JVET-O0449*, July 2019
- **HYEONGMUN JANG et al.** CE5-2.5 : De-block filtering with 4x4 chroma sample grid. *JVET-Y0092*, July 2019
- **SAVERIO BLASI et al.** EE2-2.1 DIMD merge. *JVET-AF0120*, October 2023
- **JUNYAN HUO et al.** *EE2-related: Non-adjacent spatial candidates for DIMD merge*, October 2023
- Algorithm description for Versatile Video Coding and Test Model 8 (VTM 8). *JVET-Q2002*, 07 January 2020